# EUROPEAN PATENT SPECIFICATION

(11) **EP 4 614 277 B1**
(45) Date of publication and mention of the grant of the patent: **28.10.2026**
(21) Application number: 25162066.2
(22) Date of filing: 06.03.2025
(51) Int. Cl.: G06F 1/16, B60R 11/02, B60R 11/00

(54) **MOVABLE DISPLAY DEVICE**
BEWEGLICHE ANZEIGEVORRICHTUNG
DISPOSITIF D'AFFICHAGE MOBILE

(30) Priority: 08.03.2024 JP 2024036156
(43) Date of publication of application: 10.09.2025
(73) Proprietor: Alps Alpine Co., Ltd., Ota-ku, Tokyo 145-8501 (JP)
(72) Inventor: Shirashima, Hitoshi, Iwaki-city Fukushima (JP)
(74) Representative: Schmitt-Nilson Schraud Waibel Wohlfrom Patentanwälte Partnerschaft mbB

(56) References cited:
- WO-A1-2010/026680
- US-A1- 2020 290 442

## Description

The present application is based on and claims priority to Japanese Patent Application No. 2024-036156 filed on March 8, 2024.

### Technical Field

The present disclosure relates to a movable display device capable of rotating a display member to set the display member to be in a displaying position or a non-displaying position, and restricting the display member not to move while in at least one of the displaying position or the non-displaying position.

### Background Art

Japanese Laid-Open Patent Application No. 2014-8825 discloses a monitor storage device. This monitor storage device opens and closes a monitor stored in a storage section provided on the ceiling of a passenger aircraft cabin. The monitor is supported in the storage section to be able to rotate about a rotation axis. A motor is provided in the monitor storage device. By the power of the motor, the monitor is operated to switch between a closed state, in which the monitor is parallelly stored in the storage section with respect to the storage section, and an opened state, in which the monitor is usable by being opened at an angle of about 110 degrees with respect to the storage section. A toggle spring is provided between a rotation section that rotates together with the monitor and the storage section, and the monitor is biased to be in the closed state as well as to be in the opened state by an elastic force of the toggle spring.

Japanese Laid-Open Patent Application No. 2019-21696 discloses a panel angle switching structure. This panel angle switching structure is used as a vehicle navigation device, and includes a body, a panel storage section fixed to the front of the body, and a panel stored in the panel storage section. A slide base that moves in a front-rear direction by an electric drive device is provided inside the body. When the slide base moves backward, the panel is put into an upright state, and when the slide base moves forward, the panel is put into an inclined state. A wall section is provided to the front of the slide base, and a shaft provided on the panel is rotatably supported by the wall section, and a plate spring fixed to the shaft contacts the wall section. In this structure, since the panel is held by a frictional force acting between the wall section and the plate spring, generation of mechanical undesirable noise due to vibration can be prevented.
WO 2010/026680 A1 discloses a monitor panel that can be tilted by pushing out the lower part of the monitor panel forward by means of a drive means. A guide roller and a rubber roller are provided on a side surface of a monitor panel, a rubber roller contact surface is formed on a side facing a guide surface, and the rubber roller presses the guide roller against the guide surface by force generated by elastic deformation of the rubber roller.

### Summary of the Invention

The invention is laid out in the main claims. Advantageous embodiments are laid out in the dependent claims. The present disclosure relates to a movable display device according to the appended claims. Embodiments are disclosed in the dependent claims. Particularly, a movable display device is disclosed including a support, a display member, and a driver configured to rotationally move the display member to be placed into a displaying position and a non-displaying position. A restrictor configured to restrict a movement of the display member upon bringing the display member into at least one of the displaying position or the non-displaying position is provided. The restrictor includes a roller provided on or with either of the support, or the display member or an attached member which rotationally moves with the display member, a restriction surface provided on or with another of the support, or the display member or the attached member, and a spring configured to press the roller against the restriction surface.

The spring is a cantilever that is elastically deformable, and the roller is supported on a free end of the cantilever. In conjunction with a moving direction of the roller relative to the restriction surface upon reaching at least one of the displaying position or the non-displaying position by the display member, the moving direction upon the reaching being a restriction proceeding direction, preferably the cantilever is inclined in the restriction proceeding direction such that the free end of the cantilever is positioned further ahead in the restriction proceeding direction than a fixed end of the cantilever, while the roller is pressed against the restriction surface.

The movable display device includes a displaying-side restrictor configured to restrict a movement of the display member upon reaching the displaying position by the display member, and/or a non-displaying-side restrictor configured to restrict the movement of the display member upon reaching the non-displaying position by the display member. Upon restricting the display member by the displaying-side restrictor or by the non-displaying-side restrictor, the cantilever is inclined in the restriction proceeding direction such that the free end of the cantilever is positioned further ahead in the restriction proceeding direction than the fixed end of the cantilever.

For example, in a movable display device of the present disclosure, the driver includes: a slide member in which the display member is rotatably supported; a power source configured to reciprocate the slide member to move the slide member between a predetermined displaying position and a predetermined non-displaying position; and a display-position switcher configured to rotationally move the display member toward the displaying position by using a moving force of the slide member upon moving the slide member toward the predetermined displaying position, and to rotationally move the display member toward the predetermined non-displaying position by using the moving force of the slide member upon moving the slide member toward the non-displaying position, wherein the displaying-side restrictor and the non-displaying-side restrictor are arranged with an interval in a moving direction of the slide member.

According to an embodiment, in a movable display device of the present disclosure, the cantilever and the roller are supported by the display member or an attached member that rotationally moves with the display member, the displaying-side restrictor and the non-displaying-side restrictor are provided, and for both cases where the display member is restricted by the displaying-side restrictor and by the non-displaying-side restrictor, by switching a direction of the cantilever upon moving of the slide member between the predetermined displaying position and the predetermined non-displaying position, the cantilever is inclined in the restriction proceeding direction such that the free end of the cantilever is positioned further ahead in the restriction proceeding direction than the fixed end of the cantilever.

According to a further aspect, the movable display device is provided with the support; the slide member supported to reciprocate in a direction crossing a gravitational direction with respect to the support; the display member rotatably supported by the slide member; the power source configured to reciprocate the slide member toward the predetermined displaying position and the predetermined non-displaying position; the display-position switcher configured to rotationally move the display member toward the displaying position, in which an end of the display member opposite to a rotation support side of the display member faces the gravitational direction, by using a moving force of the slide member upon moving the slide member toward the predetermined displaying position, and to rotationally move the display member toward the predetermined non-displaying position, in which the end of the display member is rotationally lifted upward, by using the moving force of the slide member upon moving the slide member toward the non-displaying position; the displaying-side restrictor configured to restrict a movement of the display member in the displaying position; and the non-displaying-side restrictor configured to restrict the movement of the display member in the non-displaying position, wherein upon moving the slide member between the predetermined displaying position and the predetermined non-displaying position, the movement of the display member is not restricted either by the displaying-side restrictor or the non-displaying-side restrictor.

According to an embodiment, a movable display device of the present disclosure is provided with a guide cam configured to guide the display-position switcher upon moving the slide member, wherein the guide cam is provided with an inclined guide portion which is inclined with respect to a moving direction of the slide member, and the display-position switcher is guided by the inclined guide portion upon moving the slide member between the predetermined displaying position and the predetermined non-displaying position, and upon guiding the display-position switcher by the inclined guide portion, the display member is not restricted either by the displaying-side restrictor or the non-displaying-side restrictor.

According to an embodiment, in a movable display device of the present disclosure, the displaying-side restrictor and the non-displaying-side restrictor preferably include the roller provided on or with either of the support, or the display member or an attached member which rotationally moves with the display member; the restriction surface provided on or with another of the support, or the display member or the attached member; and the spring which presses the roller against the restriction surface.

According to an embodiment, a movable display device of the present disclosure may be configured to include a holder configured to hold the display member rotationally moved to be placed into the non-displaying position, so as not to move in the gravitational direction by using the moving force of the slide member upon moving the slide member toward the predetermined non-displaying position.

### Brief Description of Figures

FIG. 1 is a perspective view illustrating an overall structure of a movable display device according to an embodiment of the present disclosure, in which a display member is in a displaying position;
FIG. 2 is a perspective view illustrating the overall structure of a movable display device according to an embodiment of the present disclosure, in which the display member is in a non-displaying position;
FIG. 3 is a partially enlarged view of FIG. 1 and is a partial perspective view mainly illustrating a structure of a support and a driver;
FIG. 4 is an exploded perspective view illustrating the driver as illustrated in FIG. 3;
FIG. 5 is a side sectional view illustrating a state in which the display member is in a displaying position, in a movable display device according to an embodiment of the present disclosure;
FIG. 6 is a side sectional view illustrating an operation state in which the display member is in a transition from the displaying position to the non-displaying position, in a movable display device according to an embodiment of the present disclosure;
FIG. 7 is a side sectional view illustrating a state in which the display member is in the non-displaying position, in the movable display device according to an embodiment of the present disclosure;
FIG. 8A is a partially enlarged side sectional view illustrating an operation of a displaying-side restrictor;
FIG. 8B is another partially enlarged side sectional view illustrating the operation of the displaying-side restrictor;
FIG. 9A is a partially enlarged side sectional view illustrating an operation of a non-displaying-side restrictor;
FIG. 9B is another partially enlarged side sectional view illustrating the operation of the non-displaying-side restrictor;
FIG. 10 is a partial perspective view illustrating a holder for holding the display member and an operation in the middle of holding an end of the display member;
FIG. 11 is a partial perspective view illustrating the holder for holding the display member, in a state in which the holding of the end of the display member is completed;
FIG. 12A is an explanatory diagram for illustrating a restricting operation of the non-displaying-side restrictor; and
FIG. 12B is another explanatory diagram for illustrating the restricting operation of the displaying-side restrictor.

### Detailed Description of Embodiments

In the monitor storage device described in Japanese Laid-Open Patent Application No. 2014-8825, since a large rotational force from the toggle spring acts on the monitor when the monitor is brought into the opened state and the closed state, an impact force and an impact sound are likely to be generated when the monitor switches to each state. In addition, a large driving force is required to invert the toggle spring when the monitor is rotationally moved from the opened state to the closed state and when the monitor is rotationally moved from the closed state to the opened state. Therefore, a load always acts on a driver for rotating the monitor, and abrasion or the like of the driver is likely to occur.

In the panel angle switching structure described in Japanese Laid-Open Patent Application No. 2019-21696, the frictional force between the wall portion and the plate spring always acts as a load when the panel is switched from the upright state to the inclined state, such that the loss of power is large and abrasion is likely to occur between the wall portion and the plate spring.

The present disclosure provides a movable display device capable of stabilizing the display member in at least one of a displaying position or a non-displaying position, and capable of suppressing an increase in the load for stabilizing the display member in each position.

A movable display device 1 according to an embodiment of the present disclosure is installed on the ceiling in a vehicle cabin. Alternatively, the movable display device 1 can be installed on the ceiling in a cabin of a train, on the ceiling in a cabin of an aircraft, on the ceiling in a building or the like.

In each drawing, a Y1-Y2 direction is a front-rear direction, a Y1 direction is a rear direction and a Y2 direction is a front direction. The Y1 direction is toward a predetermined displaying position, and the Y2 direction is toward a predetermined non-displaying position. An X1-X2 direction is a transverse direction, an X1 direction is a left direction, and an X2 direction is a right direction. A Z1-Z2 direction is a vertical direction, a Z1 direction is an upward direction, and a Z2 direction is a downward direction. When the movable display device 1 is installed on the ceiling in the vehicle cabin, the Z2 direction is a gravitational direction.

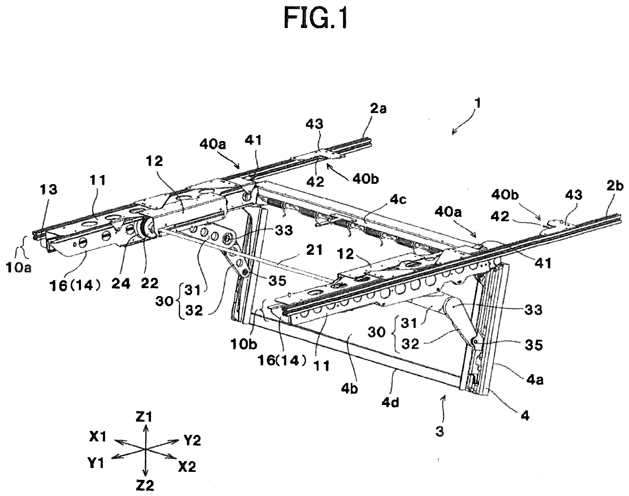

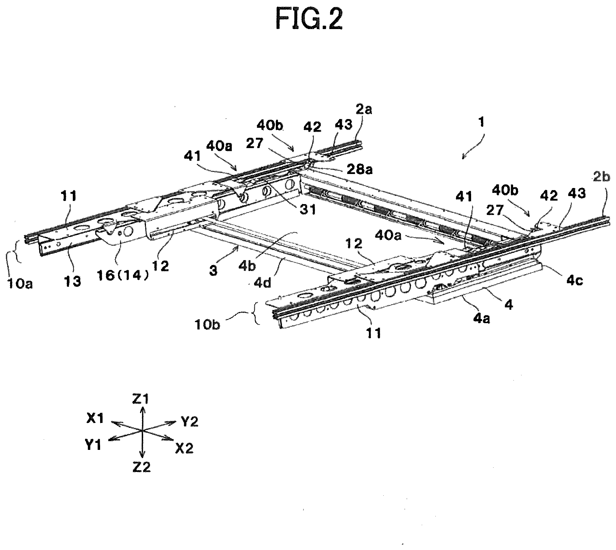

As illustrated in FIGS. 1 and 2, the movable display device 1 includes supports 2a and 2b. The supports 2a and 2b are support frames that extend linearly parallel to each other in the front-rear direction (Y1-Y2 direction). The support 2a is located on a left side (X1 side), and the support 2b is located on a right side (X2 side). When the movable display device 1 is fixed to the ceiling in the vehicle cabin, the supports 2a and 2b are fixed in parallel to an X-Y plane, which is substantially a horizontal plane.

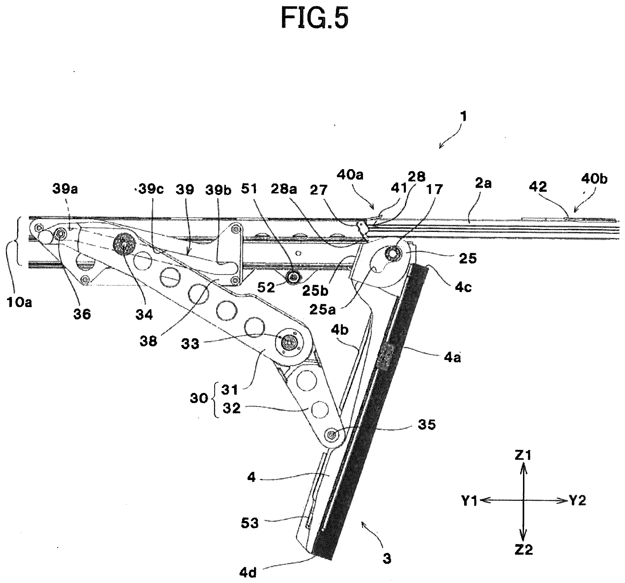

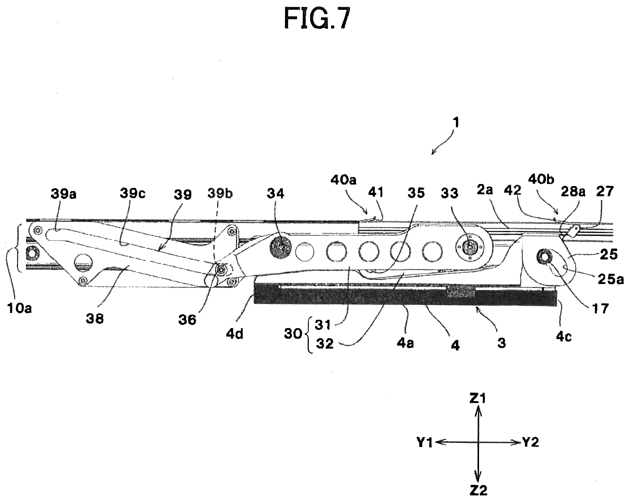

The movable display device 1 includes a display member 3. The display member 3 includes a rectangular casing 4, and the casing 4 includes a front surface 4a and a back surface 4b. A display panel such as a liquid crystal display panel and an electroluminescent panel is cased in the casing 4. The display screen of the display panel appears on the front surface 4a of the casing 4. The casing 4 includes a rotation support 4c and an end portion 4d opposite to the rotation support side where the rotation support 4c is located. In FIGS. 1 and 5, the display member 3 is in the displaying position, and the front surface 4a of the casing 4 is facing forward (Y2 direction) and slightly downward, and the end portion 4d is facing downward (Z2 direction) in the gravitational direction. In FIGS. 2 and 7, the display member 3 is in the non-displaying position (storage position), the end portion 4d of the casing 4 is lifted upward (Z1 direction), and the front surface 4a and the back surface 4b are substantially parallel to the horizontal plane (X-Y plane) .

As illustrated in FIGS. 1 and 2, a left driver 10a is provided between the support 2a and the display member 3, and a right driver 10b is provided between the support 2b and the display member 3. The drivers 10a and 10b are the structures and mechanisms of the members described in FIGS. 1 and 2, except for the supports 2a and 2b, the display member 3, and the displaying-side restrictor 40a and the non-displaying-side restrictor 40b, which will be described in the following. The left driver 10a and the right driver 10b are plane-symmetrical in a left-right direction (X1-X2 direction). The right driver 10b is provided with a motor as a drive source.

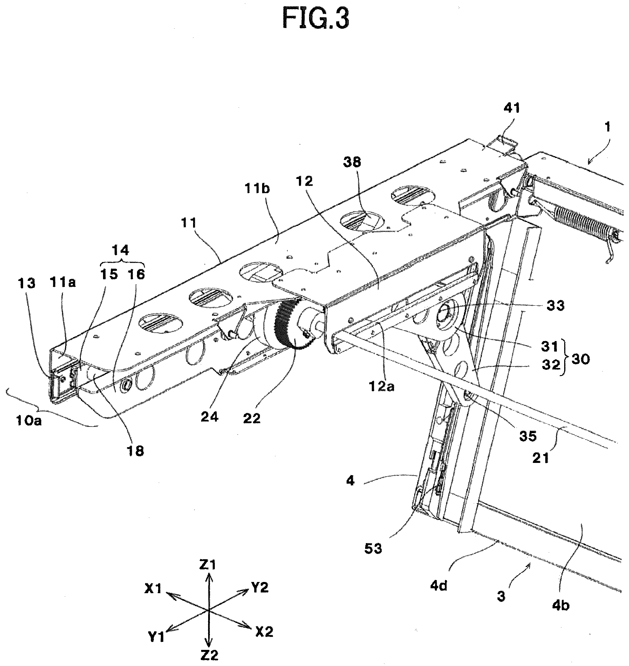

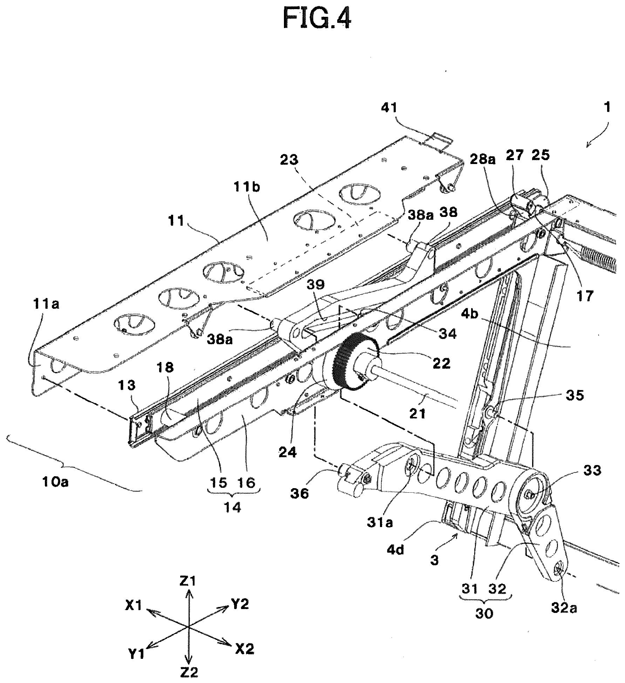

FIGS. 3 and 4 illustrate details of the left driver 10a. The left driver 10a is provided with an outer bracket 11 and an inner bracket 12. The outer bracket 11 is bent at a right angle to form a vertical support portion 11a and a horizontal support portion 11b. As illustrated in FIGS. 1 and 2, the vertical support portion 11a is fixed to an inner surface of the support 2a facing the right side (X2 side) by screwing. A fixed rail 13 is fixed to a surface facing the right side of the vertical support portion 11a by screwing. The fixed rail 13 extends linearly in the front-rear direction (Y1-Y2 direction). The left driver 10a is provided with a slide member 14. As illustrated in FIG. 4, the slide member 14 includes an outer slide portion 15 and an inner slide portion 16. In the front of the slide member 14, the outer slide portion 15 and the inner slide portion 16 are fixed to each other by a front connecting shaft 17, and in the rear, the outer slide portion 15 and the inner slide portion 16 are fixed to each other by a rear connecting shaft 18. The outer slide portion 15 is a movable rail and is slidably held by the fixed rail 13 in the front-rear direction. The slide member 14 composed of the outer slide portion 15 and the inner slide portion 16, which are fixed to each other, is supported to reciprocate linearly in the front-rear direction (Y1-Y2 direction) with respect to the support 2a.

As illustrated in FIGS. 1 and 2, the left driver 10a and the right driver 10b are connected by a connecting drive shaft 21. As illustrated in FIG. 3, the connecting drive shaft 21 is supported inside a long guide slot 12a formed in the front-rear direction in the inner bracket 12, and a left (X1 side) end of the connecting drive shaft 21 is rotatably supported by a bearing 24 fixed to the inner slide portion 16. As illustrated in FIG. 4, a rack member 23 is fixed to a lower surface of the horizontal support portion 11b of the outer bracket 11. A pinion gear 22 is fixed to a left end of the connecting drive shaft 21, and the pinion gear 22 is engaged with rack gear teeth formed in a lower portion of the rack member 23.

As illustrated in FIGS. 1 and 2, the right driver 10b is also provided with the slide member 14, and a right end of the connecting drive shaft 21 is rotatably supported by the bearing 24 fixed to the inner slide portion 16 of the slide member 14. The pinion gear 22 is also fixed to the right end of the connecting drive shaft 21, and the pinion gear 22 is engaged with the rack gear teeth of the rack member 23 fixed to the outer bracket 11 of the right driver 10b. In the right driver 10b, a motor serving as the drive source and the gears are supported by the inner slide portion 16, the pinion gear 22 is driven by the motor's power, and thus, the connecting drive shaft 21 is rotatably driven. As a result, in both the left driver 10a and the right driver 10b, the left and right sliding members 14 reciprocate in the front-rear direction (Y1-Y2 direction) in synchronization by the rotational force of the pinion gears 22 engaged with the rack members 23.

As illustrated in FIGS. 4 and 5, an attached member 25 is fixed to both the right and left ends of the rotation support 4c of the casing 4 provided in the display member 3. A support hole 25a is opened in each of the left and right attached members 25, and the front connecting shaft 17 fixed to the slide member 14 is inserted into the support hole 25a. The support holes 25a are elongated holes extending so as to draw an arc. When the support holes 25a are rotated while their movements are being restricted by the front connecting shafts 17, the display member 3 rotationally moves to switch between the displaying position and the non-displaying position.

As illustrated in FIGS. 1 and 2, each of the left driver 10a and the right driver 10b is provided with a mechanical linkage 30 serving as a display-position switcher. Each mechanical linkage 30 includes a drive linkage 31 and a driven linkage 32. The drive linkage 31 and the driven linkage 32 are rotatably connected together by a connection pin 33. As illustrated in FIGS. 3 and 4, the drive linkage 31 is positioned inside a space between the outer slide portion 15 and the inner slide portion 16 of the slide member 14 to overlap with a cam member 38, which will be described in the following. A drive pin 34 projecting into the space is fixed to the inner slide portion 16, and the drive pin 34 is rotatably inserted into a hole 31a opening at an end of the drive linkage 31. Since the drive linkage 31 rotationally moves when the slide member 14 linearly moves in the front-rear direction, a slight difference is generated between a linear movement path of the drive pin 34 and a movement path of the hole 31a. In order to solve this difference, an inner diameter of the hole 31a is formed slightly larger than a diameter of the drive pin 34. A driven pin 35 is fixed to both sides of the casing 4 of the display member 3. A hole 32a is opened at an end of the driven linkage 32 on both sides of the casing 4, and the driven pin 35 is rotatably inserted into the corresponding hole 32a.

As illustrated in FIG. 4, although the cam member 38 is positioned between the outer slide portion 15 and the inner slide portion 16 of the slide member 14, the cam member 38 is integrally formed with a fixed projection 38a projecting to the left side (X1 side), and the fixed projection 38a is fixed to the vertical support portion 11a of the outer bracket 11. When the connecting drive shaft 21 and the pinion gear 22 rotate, the left and right slide members 14 move in the front-rear direction, but the cam member 38 does not move because it is fixed to the outer bracket 11. As illustrated in FIGS. 5 to 7, a guide cam (long guide hole or guide groove) 39 is formed in the cam member 38, and a position control projection 36 fixed to a rear (Y1 side) end of the drive linkage 31 is inserted into the guide cam 39. The position control projection 36 is a slide pin that slides in the guide cam 39 or a roller that rolls in the guide cam 39. A rear end of the guide cam 39 is a displaying-position guide portion 39a formed in parallel with a moving direction of the slide member 14, and the front end of the guide cam 39 is a non-displaying-position guide portion 39b formed in parallel with the moving direction of the slide member 14. Between the displaying-position guide portion 39a and the non-displaying-position guide portion 39b is an inclined guide portion 39c inclined with respect to the moving direction of the slide member 14.

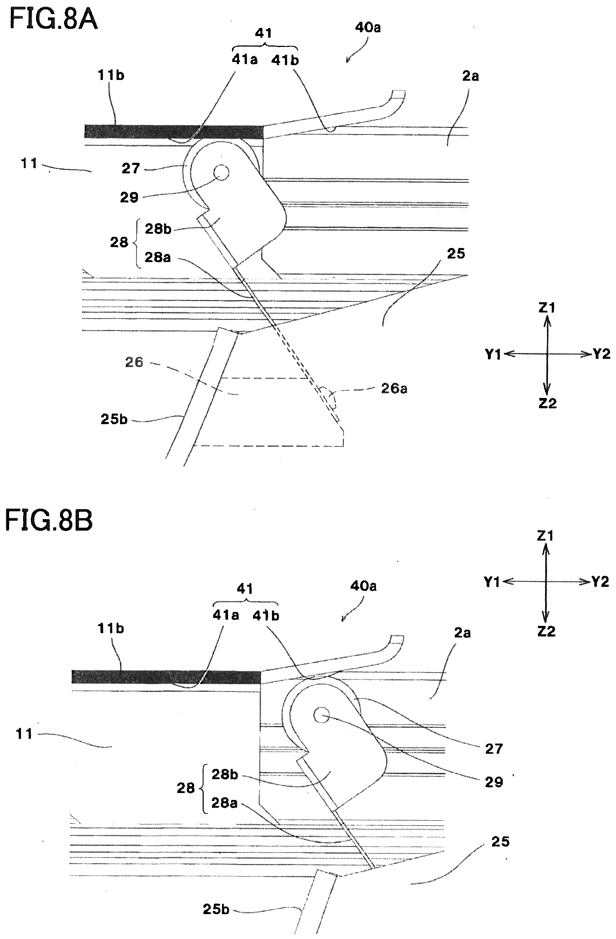

As illustrated in FIG. 5, a roller 27 and a rotation support 28 supporting the roller 27 are supported by the attached member 25 fixed to the rotation support 4c of the casing 4 forming the display member 3. As illustrated enlarged in FIGS. 8A to 9B, the rotation support 28 is formed by bending an elastically deformable metal plate, and is integrally formed with a cantilever (cantilever as a plate spring) 28a as a spring and a holder 28b formed at a free end of the cantilever 28a. The roller 27 is a roller and is rotatably supported by a support shaft 29 fixed to the holder 28b. The attached member 25 is formed of a metal plate and includes a support plate portion 25b. A fixing block 26 is fixed to an inner surface of the support plate portion 25b, and a fixed end of the cantilever 28a is fixed to the fixing block 26 by a screw 26a. The fixed end of the cantilever 28a may be directly fixed to the casing 4 of the display member 3 instead of being supported by the attached member 25.

As illustrated in FIGS. 1, 2, and 5, the movable display device 1 is provided with a displaying-side restrictor 40a and a non-displaying-side restrictor 40b. The displaying-side restrictor 40a is provided on the left and right sides of the movable display device 1, and the non-displaying-side restrictor 40b is also provided on the left and right sides of the movable display device 1. The displaying-side restrictor 40a and the non-displaying-side restrictor 40b are provided with an interval therebetween in the front-rear direction (Y1-Y2 direction). The displaying-side restrictor 40a is provided on the rear side (Y1 side), and the non-displaying-side restrictor 40b is provided on the front side (Y2 side). Each of the displaying-side restrictors 40a provided on the left and right sides of the movable display device 1 includes a part of the outer bracket 11 fixed to the corresponding support 2a or 2b, and the non-displaying-side restrictor 40b includes a part of a restricting plate 43 fixed to a front portion in each of the supports 2a and 2b.

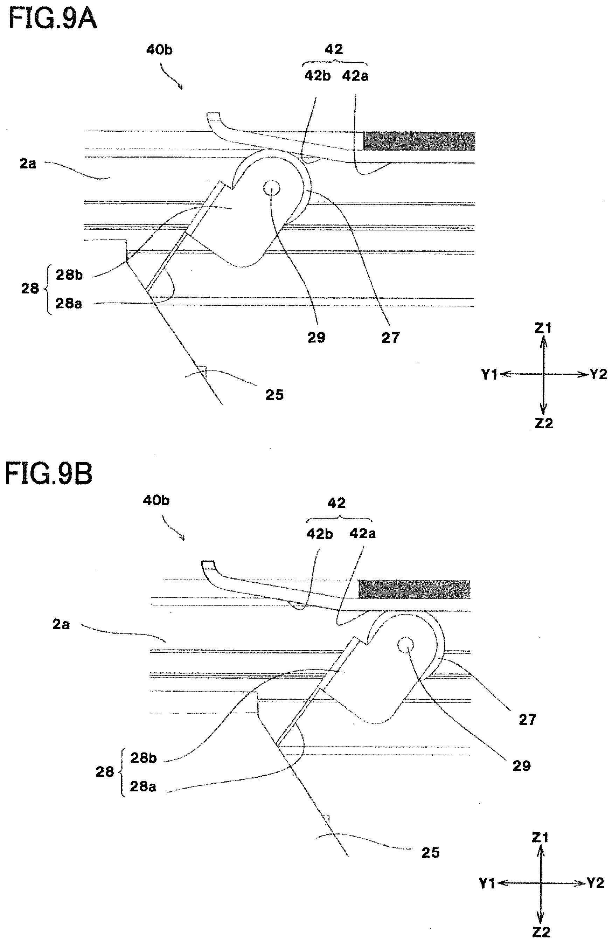

As enlarged and illustrated in FIGS. 8A and 8B, the displaying-side restrictor 40a includes a displaying-side restriction surface 41 formed on a lower surface of a front end (Y2-side end) of the horizontal support portion 11b of the outer bracket 11, the cantilever 28a, and the roller 27. The displaying-side restriction surface 41 includes a horizontal restriction surface 41a that is parallel to the X-Y plane, and an inclined restriction surface 41b that is continuous with the horizontal restriction surface 41a and inclined upward toward the front (Y2 direction). As enlarged and illustrated in FIGS. 9A and 9B, the non-displaying-side restrictor 40b includes a non-displaying-side restriction surface 42 formed on the lower surface of a rear end (Y1-side end) of the restricting plate 43, and the cantilever 28a, and the roller 27. The non-displaying-side restriction surface 42 includes a horizontal restriction surface 42a that is parallel to the X-Y plane, and an inclined restriction surface 42b that is continuous with the horizontal restriction surface 42a and inclined upward toward the rear (Y1 direction).

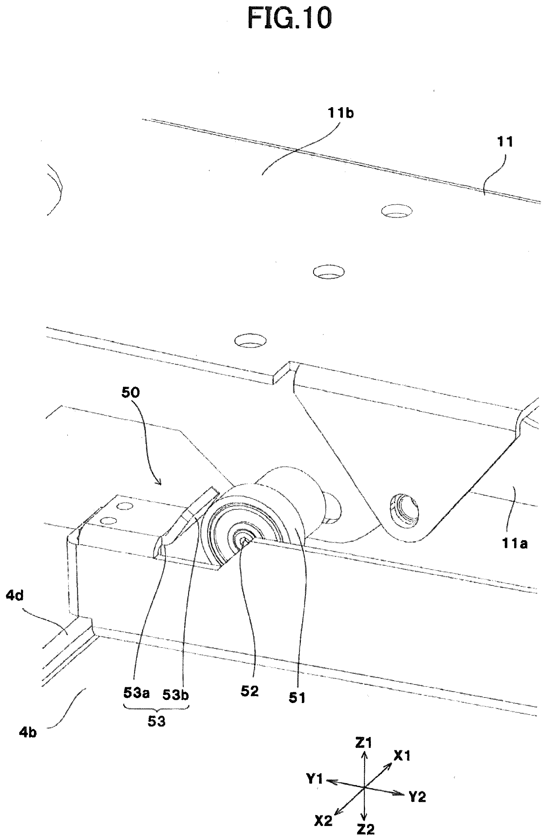

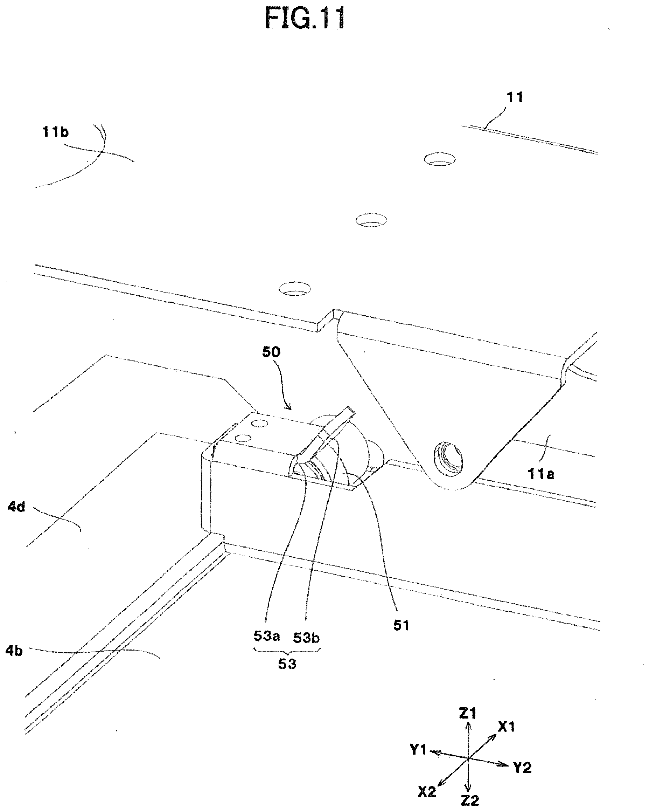

FIGS. 10 and 11 illustrate a holder 50 configured to hold the casing 4 of the display member 3 so as not to move in the gravitational direction (Z2 direction) when the display member 3 is rotationally lifted to the non-displaying position. The holder 50 includes a holder projection 51 provided on a support side and a lifting portion 53 provided on the end portion 4d of the casing 4 of the display member 3. As also illustrated in FIG. 5, the holder projection 51 is a holder roller and is rotatably supported by a roller shaft 52 fixed to the vertical support portion 11a of the outer bracket 11. The lifting portion 53 is formed in a part of the casing 4 of the display member 3 and includes a lift-guide surface 53b that is continuous with a lifting surface 53a. The lift-guide surface 53b is inclined gradually away from the back surface 4b of the casing 4 toward the rotation support 4c of the casing 4.

Next, a movement of the movable display device 1 will be described. In FIGS. 1, 3, and 5, in each of the left driver 10a and the right driver 10b, the slide member 14 is guided by the fixed rail 13 and is moved and stopped at the predetermined displaying position, which is a rear most position (Y1 direction) guided by the fixed rail 13. At this time, the display member 3 is rotationally moved to the displaying position by the operation of the mechanical linkage 30, the casing 4 of the display member 3 is rotationally moved counterclockwise with the front connecting shaft 17 as a fulcrum, and the end portion 4d of the casing 4 is directed in the gravitational direction (Z2 direction). In the movable display device 1, the supports 2a and 2b are fixed to the ceiling of the vehicle cabin or the like, and the display screen appearing on the front surface 4a of the casing 4 is directed forward and obliquely downward such that an occupant in the vehicle cabin can visually view the display screen.

As illustrated in FIG. 8A, when the slide member 14 stops at the rear predetermined displaying position and the display member 3 rotationally moves counterclockwise to be in the displaying position, in the displaying-side restrictor 40a, the roller 27 contacts the horizontal restriction surface 41a of the displaying-side restriction surface 41 integrally formed with the outer bracket 11. The roller 27 is pressed against the horizontal restriction surface 41a by a flexural elastic force of the cantilever 28a, which is a spring, and by a reactive force of a pressing force, a movement of the display member 3 is restricted so as not to be moved by rattling or the like.

When an operation for switching the display member 3 from the displaying position to the non-displaying position is performed, a rotational force is applied to the pinion gear 22 fixed to the right end of the connecting drive shaft 21 from the motor mounted on the slide member 14 of the right driver 10b. Since the connecting drive shaft 21 is driven counterclockwise, the pinion gear 22 rotates against the rack teeth of the rack member 23 in both the left driver 10a and the right driver 10b, and the slide member 14 moves forward (in the Y2 direction). The operation of the driver when the slide member 14 moves forward is as illustrated in order from FIGS. 5 to 7. Since the slide member 14 is provided with the drive pin 34 connected to the front connecting shaft 17 supporting the display member 3 and the drive linkage 31, the display member 3 and the drive linkage 31 move forward together with the slide member 14. In this process, the position control projection 36 provided in the drive linkage 31 moves the inclined guide portion 39c of the guide cam 39, and the drive linkage 31 rotates counterclockwise with the drive pin 34 as the fulcrum. This rotational force is transmitted to the casing 4 of the display member 3 via the driven linkage 32, and the display member 3 rotationally moves clockwise with the front connecting shaft 17 as the fulcrum. As illustrated in FIGS. 2 and 7, when the slide member 14 reaches the predetermined non-displaying position, which is a forward end point of the movement, a position sensor (not illustrated) detects the reach and stops the movement of the motor, the forward movement of the slide member 14 ends, and the display member 3 is put into the non-displaying position (storage position), which is a substantially horizontal position.

As illustrated in FIG. 9B, when the slide member 14 stops at the predetermined non-displaying position in the front and the display member 3 rotationally moves clockwise to be in the non-displaying position, in the non-displaying-side restrictor 40b, the roller 27 comes into contact with the horizontal restriction surface 42a of the non-displaying-side restriction surface 42 integrally formed with the restricting plate 43. Since the roller 27 is pressed against the horizontal restriction surface 42a by the flexural elastic force of the cantilever 28a, the movement of the display member 3 is restricted by the reactive force of the pressing force so as not to be moved by rattling or the like. When the slide member 14 moves to the predetermined non-displaying position, as illustrated in FIGS. 9A and 9B, since the roller 27 rolls from the inclined restriction surface 42b to the horizontal restriction surface 42a, the load acting on the slide member 14 from the non-displaying-side restrictor 40b becomes a rolling resistance, and thus, the movement of the display member 3 can be restricted in the non-displaying position with a relatively small load. This is the same when the slide member 14 moves toward the predetermined displaying position and the roller 27 rolls from the inclined restriction surface 41b to the horizontal restriction surface 41a, as illustrated in FIGS. 8A and 8B.

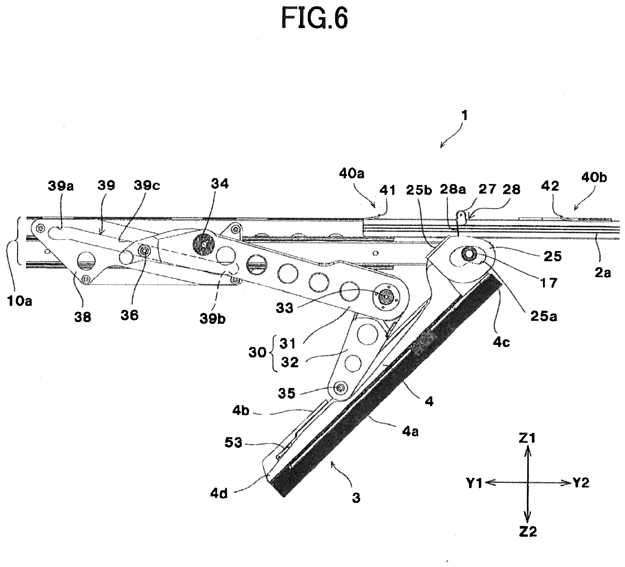

Immediately after the slide member 14 starts moving forward from the predetermined displaying position as illustrated in FIG. 5, the position control projection 36 provided on the drive linkage 31 is positioned on the displaying-position guide portion 39a of the guide cam 39. When the slide member 14 reaches the predetermined non-displaying position as illustrated in FIG. 7, the position control projection 36 is positioned on the non-displaying-position guide portion 39b of the guide cam 39. Since the displaying-position guide portion 39a and the non-displaying-position guide portion 39b of the guide cam 39 extend in parallel with the moving direction of the slide member 14, the load caused by friction or the like when the position control projection 36 moves the displaying-position guide portion 39a and non-displaying-position guide portion 39b is small. As illustrated in FIG. 6, when the slide member 14 moves between the predetermined displaying position and the predetermined non-displaying position, the position control projection 36 moves along the inclined guide portion 39c, and a forward moving force of the position control projection 36 acts on an inclined portion of the guide cam 39, such that a moving load acting on the position control projection 36 increases.

In the displaying-side restrictor 40a, the roller 27 is pressed against the horizontal restriction surface 41a when the position control projection 36 is positioned at the displaying-position guide portion 39a of the guide cam 39. In the non-displaying-side restrictor 40b, the roller 27 is pressed against the horizontal restriction surface 42a when the position control projection 36 is positioned at the non-displaying-position guide portion 39b of the guide cam 39. When the position control projection 36 is moving through the inclined guide portion 39c of the guide cam 39, the roller 27 is separated from both the horizontal restriction surface 41a and the horizontal restriction surface 42a, such that the display member 3 is not subjected to a restricting force from either the displaying-side restrictor 40a or the non-displaying-side restrictor 40b. In the movable display device 1, the load acting on the motor of the display member 3 is extremely large because the end portion 4d of the display member 3 rotationally moves in the gravitational direction and an antigravitational direction. Therefore, when the position control projection 36 is moving through the inclined guide portion 39c of the guide cam 39 and the load by the guide cam 39 is large, the restricting force acting on the display member 3 is released from both the displaying-side restrictor 40a and the non-displaying-side restrictor 40b, thereby suppressing excessive operation load from being applied to the movable display device 1.

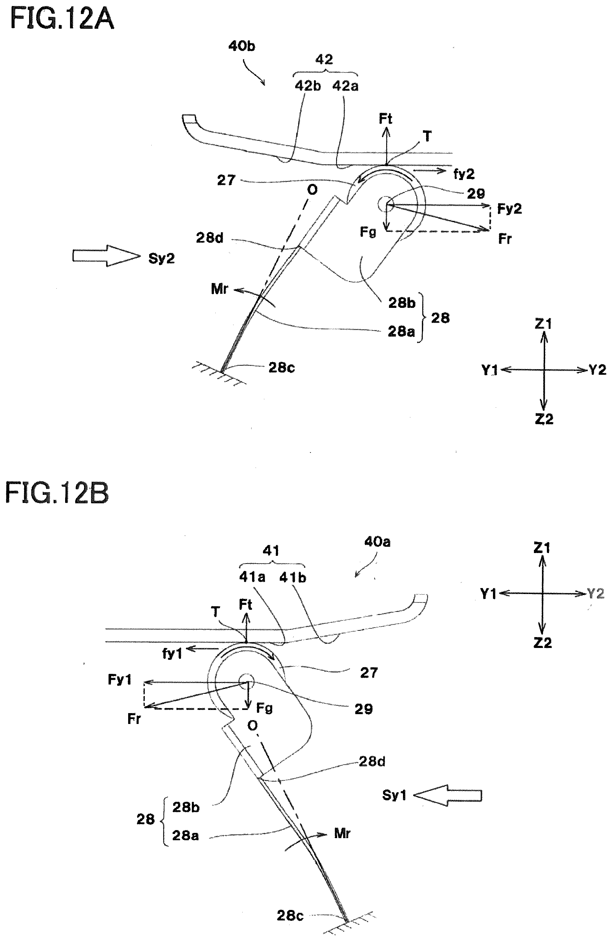

When the slide member 14 moves forward (Y2 direction) to reach the predetermined non-displaying position, in the non-displaying-side restrictor 40b, the roller 27 is guided by the inclined restriction surface 42b of the non-displaying-side restriction surface 42 to roll to reach the horizontal restriction surface 42a, as illustrated in FIG. 9A. During this time, the roller 27 is pressed against the inclined restriction surface 42b and the horizontal restriction surface 42a by the flexural elastic force of the cantilever 28a. FIG. 12A is an explanatory diagram of the load when the roller 27 is pressed against the non-displaying-side restriction surface 42. As illustrated in FIG. 7, while the slide member 14 moves to the predetermined non-displaying position, the display member 3 and the attached member 25 rotationally move in a clockwise direction. Therefore, before the roller 27 hits the non-displaying-side restriction surface 42, the cantilever 28a is rotationally moved clockwise, and the cantilever 28a is put into a state where the cantilever 28a extends obliquely toward the front direction (Y2 direction) of the slide member 14. FIG. 12A illustrates a center line O of the cantilever 28a when it is assumed that the cantilever 28a is not bent. When the slide member 14 and the display member 3 reach the non-displaying position, and the moving direction of the roller 27 relative to the non-displaying-side restriction surface 42 is a restriction proceeding direction Sy2, at a time point before the roller 27 hits the inclined restriction surface 42b of the non-displaying-side restriction surface 42, a free end side of the center line O is further inclined in a direction toward the restriction proceeding direction Sy2 than a fixed end side. When the roller 27 is pressed against the inclined restriction surface 42b and the horizontal restriction surface 42a, the cantilever 28a is deflected and deformed toward the restriction proceeding direction Sy2, and a free end 28d continues to be further inclined toward the restriction proceeding direction Sy2 than a fixed end 28c.

In FIG. 12A, when the moving force of the slide member 14 acting on the axis center of the support shaft 29 of the roller 27 is Fy2, and a contact reactive force acting on the axis center of the support shaft 29 from a contact portion T between the roller 27 and the restriction surface is Fg, a movement vector Fr, which is the vector sum of a vector Fy2 and a vector Fg, acts on the axis center of the support shaft 29. In addition, the moment Mr of a spring reactive force in which the cantilever 28a, which is bent toward the restriction proceeding direction Sy2, tries to return elastically, acts in a counterclockwise direction. Since the moment of the movement vector Fr is in an opposite direction to the moment Mr of the reactive force, a pressing force Ft acting on the non-displaying-side restriction surface 42 from the roller 27 is reduced at the contact portion T, and a rolling friction resistance fy2 of the roller 27 is also reduced. In contrast to FIG. 12A, when the roller 27 is pressed against the inclined restriction surface 42b and the horizontal restriction surface 42a, when it is assumed that the cantilever 28a is bent to the left direction in the drawing, which is opposite to the restriction proceeding direction Sy2, and that the cantilever 28a is bent toward the Y1 side of the center line O, the moment Mr of the spring reactive force becomes clockwise, that is the same direction as the moment of the movement vector Fr. Therefore, the pressing force Ft increases, and thus, the rolling friction resistance fy2 increases. In the movable display device 1 of the embodiment, the moving load due to an elastic restoring force of the cantilever 28a can be reduced by keeping the cantilever 28a inclined toward the front of the restriction proceeding direction Sy2 and bending toward the front of the restriction proceeding direction Sy2.

When the slide member 14 moves backward (Y1 direction) from the non-displaying position of the display member 3 as illustrated in FIGS. 2 and 7 and returns to the predetermined displaying position as illustrated in FIG. 5, the display member 3 is rotationally moved counterclockwise. Since the rotation support 28 supported by the attached member 25 also rotates counterclockwise, the cantilever 28a is positioned obliquely upward toward the rear (Y1 direction). In this position, as illustrated in FIG. 8B, the roller 27 supported by the cantilever 28a is guided to the inclined restriction surface 41b of the displaying-side restriction surface 41, and as illustrated in FIG. 8A, the roller 27 rotates while being pressed against the horizontal restriction surface 41a.

When the slide member 14 and the display member 3 reach the displaying position as illustrated in FIG. 12B, a restriction proceeding direction Sy1, which is the relative moving direction of the roller 27 with respect to the displaying-side restriction surface 41, becomes the Y1 direction, and the center line O when the cantilever 28a is in a free state continues to incline such that the free end side is located further toward the restriction proceeding direction Sy1 than the fixed end side. When the roller 27 is pressed against the displaying-side restriction surface 41, the cantilever 28a bends toward the restriction proceeding direction Sy1. Also, at this time, the moment due to the movement vector Fr acting on the axis center of the support shaft 29 of the roller 27 and the moment Mr of the reactive force, which is a force trying to restore the bending deformation of the cantilever 28a, are in opposite directions. Therefore, the pressing force Ft acting on the displaying-side restriction surface 41 from the roller 27 is reduced at the contact portion T, and a rolling friction resistance fy1 of the roller 27 is also reduced.

FIG. 10 illustrates a state immediately before the slide member 14 moves forward (Y2 direction) to reach the predetermined non-displaying position as illustrated in FIG. 7. At this time, in the holder 50, the lift-guide surface 53b provided close to the end portion 4d of the back surface 4b of the casing 4 of the display member 3 contacts an upper portion of the holder projection 51 supported by the outer bracket 11. When the display member 3 together with the slide member 14 moves forward (Y2 direction), the lift-guide surface 53b starts to climb up the holder projection 51, and when the slide member 14 stops at the non-displaying position, the lifting surface 53a fully climbs up the holder projection 51 as illustrated in FIG. 11. Since the portion on the side of the end portion 4d of the display member 3 is held by the holder 50, the display member 3 in the non-displaying position can maintain its position without moving in the gravitational direction and without causing rattling even when the vibration of the vehicle or the like acts.

As a modified example of the present disclosure, in each of the displaying-side restrictor 40a and the non-displaying-side restrictor 40b, the cantilever 28a and the roller 27 may be supported by the supports 2a and 2b, and the displaying-side restriction surface 41 and the non-displaying-side restriction surface 42 may be supported by the display member 3 or the attached member 25. In this modified example, in FIGS. 12A and 12B, the restriction surfaces 41 and 42 move in the front-rear direction (Y1-Y2 direction) without moving the roller 27. However, also in this case, when the moving direction of the roller 27 relative to each of the restriction surfaces 41 and 42 is the restriction proceeding direction Sy1 and the restriction proceeding direction Sy2, respectively, the contact portion T between the roller 27 and the restriction surface is positioned further toward the front in each of the restriction proceeding direction Sy1 and the restriction proceeding direction Sy2, than the center line O in the free state of the cantilever 28a, and a moving load resistance due to the flexural elastic force of the cantilever 28a can be reduced.

Furthermore, the restrictor including the cantilever 28a, the roller 27, and the restriction surface may be used only by either of the displaying-side restrictor 40a or the non-displaying-side restrictor 40b, and another type of restrictor may be used to restrict the other of the displaying-side restrictor 40a or the non-displaying-side restrictor 40b of the display member 3. It should be noted that the cantilever is not limited to a plate shape, and may have a circular or elliptical cross section.

In the above embodiments, the mechanical linkage 30 is used as the display-position switcher for switching the position of the display member 3, but instead of the mechanical linkage 30, a rotary cam member and an arm or the like for switching the position of the display member 3 by transmitting the rotational force of the rotary cam member may be used.

In the restrictor of the movable display device of the present disclosure, the roller and the restriction surface are pressed against each other, the roller is rolled, and the display member is brought to at least one of the displaying position or the non-displaying position. Therefore, the load required to put the display member into each position becomes a rolling load, and the display member can be stabilized and restricted at a low load in the displaying position and in the non-displaying position.

In the movable display device of the present disclosure, when the slide member moves between the predetermined displaying position and the predetermined non-displaying position, the movement of the display member is not restricted either by the displaying-side restrictor or the non-displaying-side restrictor. Therefore, even in a movable structure with a relatively large load in which the display member is rotationally moved from the displaying position, in which the end of the display member faces the gravitational direction, to the non-displaying position, in which the end of the display member is rotationally lifted upward, the load by the restrictor can be prevented from acting constantly, and the operation load can be prevented from becoming excessive.

## Claims

1. A movable display device (1), comprising:
a support (2a, 2b);
a display member (3); and
a driver (10a, 10b) configured to rotationally move the display member to be placed into a displaying position and a non-displaying position, wherein
a restrictor (40a, 40b) configured to restrict a movement of the display member upon bringing the display member into at least one of the displaying position or the non-displaying position is provided, and
the restrictor includes
a roller (27) provided on or with either of the support (2a, 2b), or the display member or an attached member (25) which rotationally moves with the display member;
a restriction surface (41, 42) provided on or with another of the support (2a, 2b), or the display member or the attached member (25); and
a spring (28a) configured to press the roller (27) against the restriction surface, wherein
the spring (28a) is a cantilever (28a) that is elastically deformable, and the roller (27) is supported on a free end of the cantilever,
the movable display device further comprising at least one of :
a displaying-side restrictor (40a) configured to restrict a movement of the display member upon reaching the displaying position by the display member (3); and
a non-displaying-side restrictor (40b) configured to restrict the movement of the display member upon reaching the non-displaying position by the display member (3), wherein
in conjunction with a moving direction of the roller relative to the restriction surface upon reaching the at least one of the displaying position or the non-displaying position by the display member, the moving direction upon the reaching being a restriction proceeding direction (Sy1, Sy2), upon restricting the display member by the displaying-side restrictor (40a) or by the non-displaying-side restrictor (40b), the cantilever is inclined in the restriction proceeding direction (Sy1, Sy2) such that the free end of the cantilever (28a) is positioned further ahead in the restriction proceeding direction (Sy1, Sy2) than the fixed end of the cantilever (28a), while the roller (27) is pressed against the restriction surface (41, 42).

2. The movable display device according to claim 1, wherein
the driver includes
a slide member (14) in which the display member (3) is rotatably supported;
a power source configured to reciprocate the slide member (14) to move the slide member between a predetermined displaying position and a predetermined non-displaying position; and
a display-position switcher (30) configured to rotationally move the display member (3) toward the displaying position by using a moving force of the slide member (14) upon moving the slide member (14) toward the predetermined displaying position, and to rotationally move the display member (3) toward the predetermined non-displaying position by using the moving force of the slide member (14) upon moving the slide member toward the non-displaying position, wherein
the displaying-side restrictor (40a) and the non-displaying-side restrictor are arranged with an interval in a moving direction of the slide member (14).

3. The movable display device (1) according to claim 2, wherein
the cantilever (28a) and the roller (27) are supported by the display member (3) or an attached member (25) that rotationally moves with the display member (3), and
the displaying-side restrictor (40a) and the non-displaying-side restrictor (40b) are provided, and for both cases where the display member (3) is restricted by the displaying-side restrictor and by the non-displaying-side restrictor (40b), by switching a direction of the cantilever (28a) upon moving of the slide member (14) between the predetermined displaying position and the predetermined non-displaying position, the cantilever (28a) is inclined in the restriction proceeding direction (Sy1, Sy2) such that the free end of the cantilever (28a) is positioned further ahead in the restriction proceeding direction (Sy1, Sy2) than the fixed end of the cantilever (28a).

4. The movable display device according to claim 3, comprising:
the slide member (14) supported to reciprocate in a direction crossing a gravitational direction (Z2) with respect to the support (2a, 2b);
the display member (3) rotatably supported by the slide member (14);
the power source configured to reciprocate the slide member (14) toward the predetermined displaying position and the predetermined non-displaying position;
the display-position switcher configured to rotationally move the display member (3) toward the displaying position, in which an end of the display member (3) opposite to a rotation support side of the display member (3) faces the gravitational direction, by using a moving force of the slide member (14) upon moving the slide member toward the predetermined displaying position, and to rotationally move the display member (3) toward the predetermined non-displaying position, in which the end of the display member (3) is rotationally lifted upward, by using the moving force of the slide member (14) upon moving the slide member (14) toward the non-displaying position; wherein
upon moving the slide member (14) between the predetermined displaying position and the predetermined non-displaying position, the movement of the display member (3) is not restricted either by the displaying-side restrictor (40a) or the non-displaying-side restrictor (40b).

5. The movable display device according to claim 4, further comprising:
a guide cam (39) configured to guide the display-position switcher (30) upon moving the slide member (14), wherein
the guide cam is provided with an inclined guide portion, which is inclined with respect to a moving direction of the slide member (14), and the display-position switcher (30) is guided by the inclined guide portion upon moving the slide member (14) between the predetermined displaying position and the predetermined non-displaying position, and
upon guiding the display-position switcher (30) by the inclined guide portion, the display member (3) is not restricted either by the displaying-side restrictor (40a) or the non-displaying-side restrictor (40b).

6. The movable display device according to claim 4 or 5, wherein
the displaying-side restrictor (40a) and the non-displaying-side restrictor (40b) include
the roller (27) provided on or with either of the support, or the display member or an attached member which rotationally moves with the display member;
the restriction surface (41, 42) provided on or with another of the support, or the display member or the attached member; and
the spring which presses the roller against the restriction surface.

7. The movable display device according to one of claims 4 to 6, further comprising:
a holder (50) that is configured to hold the display member (3) rotationally moved to be placed into the non-displaying position, so as not to move in the gravitational direction by using the moving force of the slide member (14) upon moving the slide member (14) toward the predetermined non-displaying position.

8. The movable display device (1) according to one of the previous claims, wherein
while the roller (27) is pressed against the restriction surface (41, 42), the free end of the cantilever (28a) is positioned further ahead in the restriction proceeding direction (Sy1, Sy2) than the fixed end of the cantilever, by the cantilever bending toward the restriction proceeding direction (Sy1, Sy2).

9. The movable display device (1) according to one of the previous claims, wherein
a rotation support (28) is configured to support the roller (27),
the rotation support (28) is formed by bending an elastically deformable metal plate, and is integrally formed with the spring (28a) and a holder (28b) that is formed at a free end of the spring, and
the roller (27) is rotatably supported by a support shaft (29) fixed to the holder (28b) that is formed pat the free end of the spring.

10. The movable display device (1) according to claim 9,
wherein the spring is a plate spring (28a).

## Patentansprüche

1. Bewegliche Anzeigevorrichtung (1), aufweisend:
einen Träger (2a, 2b);
ein Anzeigeelement (3); und
einen Treiber (10a, 10b), der dazu ausgebildet ist, das Anzeigeelement derart rotationsmäßig zu bewegen, dass dieses in eine Anzeigeposition und eine Nicht-Anzeigeposition verbracht wird,
wobei eine Begrenzungseinrichtung (40a, 40b) vorhanden ist, die dazu ausgebildet ist, eine Bewegung des Anzeigeelements zu begrenzen, nachdem das Anzeigeelement in mindestens eine von der Anzeigeposition und der Nicht-Anzeigeposition verbracht worden ist, und
wobei die Begrenzungseinrichtung aufweist:
eine Rolle (27), die an oder entweder mit dem Träger (2a, 2b) oder dem Anzeigeelement oder einem befestigten Element (25) vorgesehen ist, das sich mit dem Anzeigeelement rotationsmäßig bewegt;
eine Begrenzungsfläche (41, 42), die an oder mit einem anderen Element von dem Träger (2a, 2b) oder dem Anzeigeelement oder dem befestigten Element (25) vorgesehen ist; und
eine Feder (28a), die dazu ausgebildet ist, die Rolle (27) gegen die Begrenzungsfläche zu drücken,
wobei die Feder (28a) ein auskragendes Element (28a) ist, das elastisch verformbar ist, und die Rolle (27) an einem freien Ende des auskragenden Elements gelagert ist,
wobei die bewegliche Anzeigevorrichtung ferner mindestens eines aufweist von:
einer anzeigeseitigen Begrenzungseinrichtung (40a), die dazu ausgebildet ist, die Bewegung des Anzeigeelements zu begrenzen, wenn das Anzeigeelement (3) die Anzeigeposition erreicht;
einer nicht-anzeigeseitigen Begrenzungseinrichtung (40b), die dazu ausgebildet ist, eine Bewegung des Anzeigeelements zu begrenzen, wenn das Anzeigeelement (3) die Nicht-Anzeigeposition erreicht,
wobei in Verbindung mit einer Bewegungsrichtung der Rolle relativ zu der Begrenzungsfläche, wenn das Anzeigeelement die mindestens eine von der Anzeigeposition oder der Nicht-Anzeigeposition erreicht - wobei die Bewegungsrichtung beim Erreichen eine Richtung (Sy1, Sy2) des Voranschreitens auf die Begrenzung ist - wenn das Anzeigeelement durch die anzeigeseitige Begrenzungseinrichtung (40a) oder durch die nicht-anzeigeseitige Begrenzungseinrichtung (40b) begrenzt wird, das auskragende Element derart in Richtung (Sy1, Sy2) des Voranschreitens auf die Begrenzung geneigt wird, dass das freie Ende des auskragenden Elements (28a) in der Richtung (Sy1, Sy2) des Voranschreitens auf die Begrenzung weiter vorne positioniert ist als das festgelegte Ende des auskragenden Elements (28a), während die Rolle (27) gegen die Begrenzungsfläche (41, 42) gedrückt wird.

2. Bewegliche Anzeigevorrichtung nach Anspruch 1,
wobei der Treiber Folgendes aufweist:
ein Gleitelement (14), in dem das Anzeigeelement (3) drehbar gelagert ist;
eine Energiequelle, die dazu ausgebildet ist, das Gleitelement (14) hin und her zu bewegen, um das Gleitelement zwischen einer vorbestimmten Anzeigeposition und einer vorbestimmten Nicht-Anzeigeposition zu bewegen; und
einen Anzeigepositions-Umschalter (30), der dazu ausgebildet ist, das Anzeigeelement (3) unter Nutzung einer Bewegungskraft des Gleitelements (14) rotationsmäßig in Richtung der Anzeigeposition zu bewegen, wenn das Gleitelement (14) in Richtung der vorbestimmten Anzeigeposition bewegt wird, sowie das Anzeigeelement (3) unter Nutzung der Bewegungskraft des Gleitelements (14) rotationsmäßig in Richtung der vorbestimmten Nicht-Anzeigeposition zu bewegen, wenn das Gleitelement (14) in Richtung der vorbestimmten Nicht-Anzeigeposition bewegt wird,
wobei die anzeigeseitige Begrenzungseinrichtung (40a) und die nicht-anzeigeseitige Begrenzungseinrichtung in Bewegungsrichtung des Gleitelements (14) mit einem Abstand angeordnet sind.

3. Bewegliche Anzeigevorrichtung (1) nach Anspruch 2,
wobei das auskragende Element (28a) und die Rolle (27) durch das Anzeigeelement (3) oder ein befestigtes Element (25) gelagert sind, das sich mit dem Anzeigeelement rotationsmäßig bewegt, und
wobei die anzeigeseitige Begrenzungseinrichtung (40a) und die nicht-anzeigeseitige Begrenzungseinrichtung (40b) vorhanden sind und für beide Fälle, in denen das Anzeigeelement (3) durch die anzeigeseitige Begrenzungseinrichtung und durch die nicht-anzeigeseitige Begrenzungseinrichtung (40b) begrenzt wird, das auskragende Element (28a) durch Umschalten einer Richtung des auskragenden Elements (28a) bei Bewegung des Gleitelements (14) zwischen der vorbestimmten Anzeigeposition und der vorbestimmten Nicht-Anzeigeposition derart in Richtung (Sy1, Sy2) des Voranschreitens auf die Begrenzung geneigt wird, dass das freie Ende des auskragenden Elements (28a) in der Richtung (Sy1, Sy2) des Voranschreitens auf die Begrenzung weiter vorne positioniert wird als das festgelegte Ende des auskragenden Elements (28a).

4. Bewegliche Anzeigevorrichtung nach Anspruch 3,
aufweisend:
das Gleitelement (14), das derart gelagert ist, dass es sich in einer Richtung, die eine Schwerkraftrichtung (Z2) in Bezug auf den Träger (2a, 2b) kreuzt, hin und her bewegen kann;
das Anzeigeelement, das durch Gleitelement (14) drehbar abgestützt ist;
die Energiequelle, die dazu ausgebildet ist, das Gleitelement (14) in Richtung auf die vorbestimmte Anzeigeposition und die vorbestimmte Nicht-Anzeigeposition hin und her zu bewegen;
den Anzeigepositions-Umschalter, der dazu ausgebildet ist, das Anzeigeelement (3) in Richtung der Anzeigeposition zu bewegen, in der ein Ende des Anzeigeelements (3) gegenüber einer Rotationsabstützseite des Anzeigeelements (3) in die Schwerkraftrichtung weist, indem eine Bewegungskraft des Gleitelements (14) bei der Bewegung des Gleitelements in Richtung der vorbestimmten Anzeigeposition genutzt wird, sowie das Anzeigeelement (3) in Richtung der vorbestimmten Nicht-Anzeigeposition zu bewegen, in der das Ende des Anzeigeelements (3) rotationsmäßig nach oben angehoben ist, indem die Bewegungskraft des Gleitelements (14) bei der Bewegung des Gleitelements (14) in Richtung der Nicht-Anzeigeposition genutzt wird;
wobei bei der Bewegung des Gleitelements (14) zwischen der vorbestimmten Anzeigeposition und der vorbestimmten Nicht-Anzeigeposition die Bewegung des Anzeigeelements (3) weder durch die anzeigeseitige Begrenzungseinrichtung (40a) noch durch die nicht-anzeigeseitige Begrenzungseinrichtung (40b) eingeschränkt wird.

5. Bewegliche Anzeigevorrichtung nach Anspruch 4,
die ferner aufweist:
eine Führungsnocke (39), die dazu ausgebildet ist, den Anzeigepositions-Umschalter (30) beim Bewegen des Gleitelements (14) zu führen, wobei
die Führungsnocke mit einem geneigten Führungsbereich versehen ist, der in Bezug auf eine Bewegungsrichtung des Gleitelements (14) geneigt ist, und der Anzeigepositions-Umschalter (30) durch den geneigten Führungsbereich geführt wird, wenn das Gleitelement (14) zwischen der vorbestimmten Anzeigeposition und der vorbestimmten Nicht-Anzeigeposition bewegt wird, und
wobei beim Führen des Anzeigepositions-Umschalters (30) durch den geneigten Führungsbereich das Anzeigeelement (3) weder durch die anzeigeseitige Begrenzungseinrichtung (40a) noch durch die nicht-anzeigeseitige Begrenzungseinrichtung (40b) eingeschränkt wird.

6. Bewegliche Anzeigevorrichtung nach Anspruch 4 oder 5,
wobei die anzeigeseitige Begrenzungseinrichtung (40a) und die nicht-anzeigeseitige Begrenzungseinrichtung (40b) aufweisen:
die Rolle (27), die an oder entweder mit dem Träger oder dem Anzeigeelement oder einem befestigten Element vorgesehen ist, das sich mit dem Anzeigeelement rotationsmäßig bewegt;
die Begrenzungsfläche (41), die an oder mit einem anderen Element von dem Träger oder dem Anzeigeelement oder dem befestigten Element vorgesehen ist; und
die Feder, die die Rolle gegen die Begrenzungsfläche drückt.

7. Bewegliche Anzeigevorrichtung nach einem der Ansprüche 4 bis 6,
die ferner aufweist:
einen Halter (50), die dazu ausgebildet ist, das Anzeigeelement, das rotationsmäßig in die Nicht-Anzeigeposition bewegt werden soll, derart zu halten, dass es sich nicht in Richtung der Schwerkraft bewegt, indem die Bewegungskraft des Gleitelements (14) beim Bewegen des Gleitelements (14) in Richtung der vorbestimmten Nicht-Anzeigeposition genutzt wird.

8. Bewegliche Anzeigevorrichtung (1) nach einem der vorhergehenden Ansprüche,
wobei, während die Rolle (27) gegen die Begrenzungsfläche (41, 42) gedrückt wird, das freie Ende des auskragenden Elements (28a) in der Richtung (Sy1, Sy2) des Voranschreitens auf die Begrenzung weiter vorne positioniert ist als das festgelegte Ende des auskragenden Elements, indem sich das auskragende Element in der Richtung (Sy1, Sy2) des Voranschreitens auf die Begrenzung biegt.

9. Bewegliche Anzeigevorrichtung (1) nach einem der vorhergehenden Ansprüche,
wobei ein Rotationsträger (28) dazu ausgebildet ist, die Rolle (27) abzustützen,
wobei der Rotationsträger (28) durch Biegen einer elastisch verformbaren Metallplatte gebildet ist und mit der Feder (28a) und einem Halter (28b), der an einem freien Ende der Feder ausgebildet ist, einstückig ausgebildet ist, und
wobei die Rolle (27) durch eine Stützachse (29) drehbar abgestützt ist, die an dem Halter (28b) festgelegt ist, der an dem freien Ende der Feder ausgebildet ist.

10. Bewegliche Anzeigevorrichtung (1) nach Anspruch 9,
wobei die Feder eine Federplatte (28a) ist.

## Revendications

1. Dispositif d'affichage mobile (1), comprenant :
un support (2a, 2b) ;
un élément d'affichage (3) ; et
un dispositif d'entraînement (10a, 10b) configuré pour déplacer en rotation l'élément d'affichage de manière à le placer dans une position d'affichage et dans une position de non-affichage, dans lequel
un dispositif de limitation (40a, 40b) configuré pour limiter un déplacement de l'élément d'affichage lors de l'amener de l'élément d'affichage dans au moins l'une de la position d'affichage ou de la position de non-affichage est prévu, et
le dispositif de limitation comprend
un galet (27) disposé sur ou avec l'un parmi le support (2a, 2b), l'élément d'affichage ou un élément fixé (25) qui se déplace en rotation avec l'élément d'affichage ;
une surface de limitation (41, 42) disposée sur ou avec un autre parmi le support (2a, 2b), l'élément d'affichage ou l'élément fixé (25) ; et
un ressort (28a) configuré pour presser le galet (27) contre la surface de limitation, dans lequel
le ressort (28a) est un porte-à-faux (28a) élastiquement déformable, et le galet (27) est supporté sur une extrémité libre du porte-à-faux,
le dispositif d'affichage mobile comprenant en outre au moins l'un parmi :
un limiteur côté affichage (40a) configuré pour limiter un déplacement de l'élément d'affichage lorsque l'élément d'affichage (3) atteint la position d'affichage ; et
un limiteur côté non-affichage (40b) configuré pour limiter le déplacement de l'élément d'affichage lorsque l'élément d'affichage (3) atteint la position de non-affichage, dans lequel,
en liaison avec une direction de déplacement du galet par rapport à la surface de limitation lorsque l'élément d'affichage atteint au moins l'une de la position d'affichage ou de la position de non-affichage, la direction de déplacement lors de l'atteinte étant une direction de progression de limitation (Sy1, Sy2), lors de la limitation de l'élément d'affichage par le limiteur côté affichage (40a) ou par le limiteur côté non-affichage (40b), le porte-à-faux est incliné dans la direction de progression de limitation (Sy1, Sy2) de telle sorte que l'extrémité libre du porte-à-faux (28a) est positionnée plus en avant, dans la direction de progression de limitation (Sy1, Sy2), que l'extrémité fixe du porte-à-faux (28a), tandis que le galet (27) est pressé contre la surface de limitation (41, 42).

2. Dispositif d'affichage mobile selon la revendication 1, dans lequel
le dispositif d'entraînement comprend
un élément coulissant (14) dans lequel l'élément d'affichage (3) est supporté de manière rotative ;
une source de puissance configurée pour faire effectuer un mouvement de va-et-vient à l'élément coulissant (14) afin de déplacer l'élément coulissant entre une position d'affichage prédéterminée et une position de non-affichage prédéterminée ; et
un dispositif de commutation de position d'affichage (30) configuré pour déplacer en rotation l'élément d'affichage (3) vers la position d'affichage en utilisant une force de déplacement de l'élément coulissant (14) lors du déplacement de l'élément coulissant (14) vers la position d'affichage prédéterminée, et pour déplacer en rotation l'élément d'affichage (3) vers la position de non-affichage prédéterminée en utilisant la force de déplacement de l'élément coulissant (14) lors du déplacement de l'élément coulissant vers la position de non-affichage, dans lequel
le limiteur côté affichage (40a) et le limiteur côté non-affichage sont disposés avec un intervalle dans une direction de déplacement de l'élément coulissant (14).

3. Dispositif d'affichage mobile (1) selon la revendication 2, dans lequel
le porte-à-faux (28a) et le galet (27) sont supportés par l'élément d'affichage (3) ou par un élément fixé (25) qui se déplace en rotation avec l'élément d'affichage (3), et
le limiteur côté affichage (40a) et le limiteur côté non-affichage (40b) sont prévus, et, pour les deux cas dans lesquels l'élément d'affichage (3) est limité par le limiteur côté affichage et par le limiteur côté non-affichage (40b), grâce à une commutation d'une direction du porte-à-faux (28a) lors du déplacement de l'élément coulissant (14) entre la position d'affichage prédéterminée et la position de non-affichage prédéterminée, le porte-à-faux (28a) est incliné dans la direction de progression de limitation (Sy1, Sy2) de telle sorte que l'extrémité libre du porte-à-faux (28a) est positionnée plus en avant, dans la direction de progression de limitation (Sy1, Sy2), que l'extrémité fixe du porte-à-faux (28a).

4. Dispositif d'affichage mobile selon la revendication 3, comprenant :
l'élément coulissant (14) supporté de manière à effectuer un mouvement de va-et-vient dans une direction croisant une direction de gravité (Z2) par rapport au support (2a, 2b) ;
l'élément d'affichage (3) supporté de manière rotative par l'élément coulissant (14) ;
la source de puissance configurée pour faire effectuer un mouvement de va-et-vient à l'élément coulissant (14) vers la position d'affichage prédéterminée et la position de non-affichage prédéterminée ; et
le dispositif de commutation de position d'affichage configuré pour déplacer en rotation l'élément d'affichage (3) vers la position d'affichage, dans laquelle une extrémité de l'élément d'affichage (3) opposée à un côté de support en rotation de l'élément d'affichage (3) fait face à la direction de gravité, en utilisant une force de déplacement de l'élément coulissant (14) lors du déplacement de l'élément coulissant vers la position d'affichage prédéterminée, et pour déplacer en rotation l'élément d'affichage (3) vers la position de non-affichage prédéterminée, dans laquelle ladite extrémité de l'élément d'affichage (3) est soulevée vers le haut par rotation, en utilisant la force de déplacement de l'élément coulissant (14) lors du déplacement de l'élément coulissant (14) vers la position de non-affichage ;
dans lequel
lors du déplacement de l'élément coulissant (14) entre la position d'affichage prédéterminée et la position de non-affichage prédéterminée, le mouvement de l'élément d'affichage (3) n'est limité ni par le limiteur côté affichage (40a) ni par le limiteur côté non-affichage (40b).

5. Dispositif d'affichage mobile selon la revendication 4, comprenant en outre :
une came de guidage (39) configurée pour guider le dispositif de commutation de position d'affichage (30) lors du déplacement de l'élément coulissant (14), dans lequel
la came de guidage est pourvue d'une partie de guidage inclinée, qui est inclinée par rapport à une direction de déplacement de l'élément coulissant (14), et le dispositif de commutation de position d'affichage (30) est guidé par la partie de guidage inclinée lors du déplacement de l'élément coulissant (14) entre la position d'affichage prédéterminée et la position de non-affichage prédéterminée, et
lors du guidage du dispositif de commutation de position d'affichage (30) par la partie de guidage inclinée, l'élément d'affichage (3) n'est limité ni par le limiteur côté affichage (40a) ni par le limiteur côté non-affichage (40b).

6. Dispositif d'affichage mobile selon la revendication 4 ou 5, dans lequel
le limiteur côté affichage (40a) et le limiteur côté non-affichage (40b) comprennent :
le galet (27) disposé sur ou avec l'un parmi le support, l'élément d'affichage ou un élément fixé qui se déplace en rotation avec l'élément d'affichage ;
la surface de limitation (41, 42) disposée sur ou avec un autre parmi le support, l'élément d'affichage ou l'élément fixé ; et
le ressort qui presse le galet contre la surface de limitation.

7. Dispositif d'affichage mobile selon l'une quelconque des revendications 4 à 6, comprenant en outre :
un support de maintien (50) configuré pour maintenir l'élément d'affichage (3), déplacé en rotation pour être placé dans la position de non-affichage, de manière à ne pas se déplacer dans la direction de la gravité en utilisant la force de déplacement de l'élément coulissant (14) lors du déplacement de l'élément coulissant (14) vers la position de non-affichage prédéterminée.

8. Dispositif d'affichage mobile (1) selon l'une quelconque des revendications précédentes, dans lequel,
tandis que le galet (27) est pressé contre la surface de limitation (41, 42), l'extrémité libre du porte-à-faux (28a) est positionnée plus en avant, dans la direction de progression de limitation (Sy1, Sy2), que l'extrémité fixe du porte-à-faux, en raison de la flexion du porte-à-faux (28a) vers la direction de progression de limitation (Sy1, Sy2).

9. Dispositif d'affichage mobile (1) selon l'une quelconque des revendications précédentes, dans lequel un support de rotation (28) est configuré pour supporter le galet (27),
le support de rotation (28) est formé en pliant une plaque métallique élastiquement déformable, et est formé d'une seule pièce avec le ressort (28a) et un support (28b) qui est formé à une extrémité libre du ressort, et
le galet (27) est supporté de manière rotative par un arbre de support (29) fixé au support (28b) qui est formé à l'extrémité libre du ressort.

10. Dispositif d'affichage mobile (1) selon la revendication 9,
dans lequel le ressort est un ressort en lame (28a).
